# EUROPÄISCHE PATENTSCHRIFT

(11) **EP 1 389 737 B1**
(45) Veröffentlichungstag und Bekanntmachung des Hinweises auf die Patenterteilung: **07.09.2005**
(21) Anmeldenummer: 03008679.7
(22) Anmeldetag: 16.04.2003
(51) Int. Cl.: G02B 27/10, G02B 23/04, G02B 25/04, G02B 13/06, G02B 13/16

(54) **Weitwinkelsucher mit schaltbarem Mikroblendenraster**
Wide angle viewfinder with micro shutter array
Viseur à grande angle avec réseau de microobturateurs commutables

(30) Priorität: 16.07.2002 DE 10232259
(43) Veröffentlichungstag der Anmeldung: 18.02.2004
(73) Patentinhaber: Diehl BGT Defence GmbH & Co.KG, 88662 Überlingen (DE)
(72) Erfinder: Tholl, Hans Dieter, 88690 Uhldingen (DE); Baumann, Rainer, 88662 Überlingen (DE); Krogmann, Dirk, 88662 Überlingen (DE)
(74) Vertreter: Diehl Patentabteilung

(56) Entgegenhaltungen:
- EP-A- 0 029 568
- EP-A- 0 432 025
- EP-A- 0 540 241
- EP-A- 0 905 539
- WO-A-95/04299
- US-A- 5 282 073
- US-B1- 6 204 955

## Beschreibung

Die Erfindung betrifft *ein Rundumsuchgerät* zum Beobachten eines großen Raumwinkels mittels eines bildauflösenden Detektors mit einem Raster von Detektorelementen, enthaltend: ein erstes abbildendes optisches System, durch welches eine Zwischenabbildung eines Gesichtsfelds in einer Zwischenbildebene erzeugbar ist, ein zweites abbildendes optisches System, durch welches die Zwischenbildebene auf dem bildauflösenden Detektor abgebildet wird, wobei jedem Detektorelement ein Zwischenbildbereich zugeordnet ist, der auf das Detektorelement abgebildet wird, und eine in der Zwischenbildebene angeordnete Mikroblendenanordnung, durch welche nacheinander verschiedene Teilbereiche jedes Zwischenbildbereiches unter Abdeckung des übrigen Zwischenbildbereiches freigebbar sind.

Rundumsuchgeräte haben die Aufgabe, einen großen Raumwinkel, etwa einen Halbraum, mittels eines auf Strahlung aus dem Raumwinkel ansprechenden Detektors laufend zu beobachten. Bekannte Rundumsuchgeräte arbeiten mit einer periodischen Abtastung des Raumwinkels mittels beweglicher optischer Glieder, durch welche ein Abbildungsstrahlengang ablenkbar ist. Beispiele solcher Rundumsuchgeräte zeigen die US 5,977,536 A und die EP 0 840 157 A2. Solche Rundumsuchgeräte sind aufwendig, sperrig und durch bewegliche Teile störanfällig.

Die US 6,005,721 A (DE 199 04 914 A1) zeigt einen Sucher zum Erfassen eines großen Gesichtsfeldes. Der Sucher enthält als das erste abbildende optische System ein abbildendes Objektiv sowie eine davor in der Pupille angeordnete flache, vierseitige Pyramide als strahlablenkende Optik. Dadurch werden in der Zwischenbildebene übereinander Bilder von vier verschiedenen Gesichtsfeldbereichen abgebildet, wobei die Abbildungsstrahlengänge für die verschiedenen Gesichtsfeldbereiche aus unterschiedlichen Richtungen auf die Zwischenbildebene einfallen. In der Zwischenbildebene ist ein mikrooptisches Strahlenablenkelement angeordnet, welches die verschiedenen Abbildungsstrahlengänge nacheinander in den Strahlengang des zweiten abbildenden optischen Systems und damit auf den bildauflösenden Detektor leitet. Der Detektor empfängt daher nacheinander Bilder verschiedener makroskopischer Gesichtsfeldbereiche, die zu einem "elektronischen Bild" eines großen Gesichtsfeldes zusammengesetzt werden.

Bei dieser Anordnung begrenzt der Öffnungswinkel des ersten abbildenden optischen Systems die Größe des auf einmal erfaßbaren Gesichtsfeldbereiches. Der Detektor bestimmt die Bildauflösung. Das Mikrolinsensystem schaltet zwischen verschiedenen Beobachtungsrichtungen um. Das gesamte erfaßbare Gesichtsfeld ist zwar gegenüber dem Öffnungswinkel des ersten abbildenden optischen Systems um einen Faktor vier vergrößert, jedoch begrenzt. Eine solche Anordnung kann nicht als Rundumsuchgerät zum Erfassen eines Halbraumes benutzt werden.

Durch die DE 199 04 914 A ist eine bildauflösende Detektoranordnung bekannt, bei welcher durch ein erstes abbildendes optisches System ein Bild einer Objektszene in einer Zwischenbildebene erzeugt wird. Dieses Bild wird mittels eines zweiten abbildenden optischen Systems auf einem bildauflösenden Detektor mit einem Raster von Detektorelementen abgebildet. In dieser Zwischenbildebene sitzen zwei Linsenraster: Ein erstes Linsenraster aus Zerstreuungslinsen ist so dimensioniert, daß jedem Detektorelement vier Zerstreuungslinsen des ersten Linsenrasters zugeordnet sind. Diese vier Zerstreuungslinsen und nur diese werden von dem zweiten optischen System auf das Detektorelement abgebildet. Sie definieren einen dem Detektorelement zugeordneten Zwischenbildbereich. Das zweite, objektseitige Linsenraster enthält für jeden Zwischenbildbereich nur eine Sammellinse. Der Zwischenraum zwischen diesen Sammellinsen ist undurchsichtig. Das zweite Linsenraster kann nun durch Piezosteller relativ zu dem ersten Linsenraster schrittweise in vier verschiedene Stellungen bewegt werden. Jede dieser vier Stellungen ist einem Teil der Fläche jedes Detektorelements zugeordnet. Nur dieser Teil wird in der betreffenden Stellung belichtet. Das bringt eine Erhöhung der Auflösung, da in jeder Stellung ein Signal des Detektorelementes nach Maßgabe eines nur einem viertel Zwischenbildbereich entsprechenden Pixels erzeugt wird. Die Signale können dann zu einem elektronischen Bild ineinandergeschachtelt werden, das eine gegenüber der Auflösung des Detektors erhöhte Auflösung hat. Den beiden Linsenrastern kann eine weitere Relativverschiebung überlagert werden, durch welche in einer ähnlichen Anordnung wie der von US 60 05 721 A die Abbildungsstrahlengänge verschiedener, in der Zwischenbildebene überlagerter Bilder verschiedener Gesichtsfeldbereiche nacheinander auf den Detektor geleitet werden.

Ein großes Gesichtsfeld wird bei der Detektoranordnung nach DE 199 04 914 A1 wie bei der US 60 05 721 A durch Überlagerung von Bildern der Gesichtsfeldbereiche in der Zwischenbildebene und Ablenkung der Abbildungsstrahlengänge durch Linsenraster, also brechende Glieder, erreicht. Das dabei erfaßbare Gesichtsfeld ist wie bei der Detektoranordnung nach US 60 05 721 A begrenzt. Weiterhin müssen zur Erzielung eines großen Gesichtsfeldes bei hoher Auflösung die Linsenraster zwei überlagerte Stellbewegungen mit hoher Präzision ausführen. Das ist nur schwer zu bewerkstelligen. Die Herstellung präziser Linsenraster ist aufwendig.

Die US 519 203 A betrifft einen Sucher für zielverfolgende Flugkörper. Ein erstes abbildendes optisches System erzeugt ein Bild eines Gesichtsfeldes auf einem Spiegelraster, das aus einer Vielzahl von einzeln ansteuerbaren, kippbaren Spiegelelementen besteht. Dieses Spiegelraster ist durch ein zweites abbildendes optisches System auf einen bildauflösenden Detektor abgebildet, der eine zweidimensionale Anordnung von Detektorelementen aufweist. Jedem Detektorelement ist eine Sub-Matrix des Spiegelrasters zugeordnet, die mehrere Spiegelelemente aufweist und auf das Detektorelement abgebildet wird. Zur Erhöhung der Auflösung wird nacheinander jeweils ein Spiegelelement jeder Sub-Matrix so angesteuert, daß es die darauffallenden Abbildungsstrahlen auf das zugehörige Detektorelement reflektieren.

Die EP 1 026 875 A2 zeigt in Fig.1 ein Mikroblendenraster zur Erhöhung der Auflösung. Dieses Miltroblendenraster ist unmittelbar vor einem Substrat angeordnet, das auf seiner Vorderseite ein Mikrolinsenraster bildet und auf seiner Rückseite die Detektorelemente eines bildauflösenden Detektors trägt.

Als bevorzugte Ausführung der EP 1 026 875 A2 ist eine Anordnung beschrieben, bei welcher zur Erfassung eines großen Gesichtsfeldes in der Bildebene mehrere Gesichtsfeldteile überlagert sind und anhand der Strahlrichtung der Abbildungsstrahlen nacheinander auf die zweite Optik und den bildauflösenden Detektor geleitet werden.

Die DE 43 27 944 A1 zeigt ein Blendenraster zur Verbesserung der Auflösung von Bilddetektoren bei Mikroskopen.

Die EP 0 432 025 A1 betrifft einen Empfänger für modulierte optische Signale zum Übertragen von Meldungen von einem Flugzeugträger zu einem Flugzeug. Das Problem ist dort, diese optischen Signale, aus welcher Richtung sie auch kommen, wie die Position und die Fluglage des Flugzeugs zu dem Flugzeugträger auch ist, auf eine Detektoranordnung zu leiten. Deshalb werden die von dem Sender ausgesandten, modulierten optischen Signale mittels einer Fischaugen-Optik erfasst.

Die GB 2 368 221 A zeigt eine Kamera - Apparatur, die in einem konventionellen als auch in einem omnidirektionalen Modus betrieben werden kann. Die omnidirektionale Abbildung wird dabei über eine Fischaugen-Optik ermöglicht.

Der Erfindung liegt die Aufgabe zugrunde, eine Detektoranordnung der eingangs genannten Art so aufzubauen, dass sie als Rundumsuchgerät verwendbar ist.

Der Erfindung liegt weiter die Aufgabe zugrunde, eine solche Detektoranordnung so aufzubauen, dass sie einen sehr großen Raumwinkel mit hoher Auflösung zu erfassen vermag. Dabei soll eine hohe Genauigkeit des erzeugten "elektronischen Bildes" gewährleistet sein.

Der Erfindung liegt schließlich die Aufgabe zugrunde, eine Detektoranordnung zum Erfassen sehr großer Raumwinkel, insbesondere eines Halbraumes, mit möglichst einfachen Mitteln und unter Vermeidung verschleißanfälliger, mikroskopischer beweglicher Teile aufzubauen.

Erfindungsgemäß werden diese Aufgaben mit einer Detektoranordnung der eingangs genannten Art dadurch gelöst, dass
(a) das erste abbildende optische System eine Fischaugenoptik ist,
(b) die mikrooptische Anordnung von einer reinen Mikroblendenanordnung ohne brechende Glieder gebildet ist,
(c) die Mikroblendenanordnung ein erstes Blendenraster mit einem Schachbrettmuster und ein darüber liegendes zweites Blendenraster mit einem Streifenmuster mit abwechselnd durchlässigen und undurchlässigen Streifen aufweist, wobei die Breite der Streifen des zweiten Blendenrasters gleich der Breite der Felder des Schachbrettmusters des ersten Blendenrasters ist und jeder Streifen des zweiten Blendenrasters einen Streifen von abwechselnd durchlässigen und undurchlässigen Feldern des Schachbrettmusters des ersten Blendenrasters überdeckt, und
(d) jeweils vier in einem Quadrat aneinandergrenzende Felder des Schachbrettmusters des ersten Blendenrasters einem Zwischenbildbereich des Zwischenbildes entsprechen.

Die Erfindung verwendet als erstes abbildendes optisches System eine "Fischaugenoptik". Solche Fischaugenoptiken sind an sich bekannt. Es handelt sich dabei um Weitwinkelobjektive, die ähnlich einem Fischauge einen extrem großen Raumwinkel, bis zum Halbraum, zu erfassen vermögen. Auf diese Weise wird der gesamte Halbraum auf einmal als ein Bild in der Zwischenbildebene abgebildet. Es erfolgt also in der Zwischenbildebene keine Überlagerung von Gesichtsfeldbereichen wie bei den vorstehend geschilderten bekannten Detektoranordnungen. Es hat sich gezeigt, dass trotzdem die Auflösung des Zwischenbildes größer ist als das Auflösungsvermögen des Detektors. Deshalb ist in der Zwischenbildebene eine Mikroblendenanordnung angeordnet, die zur Erhöhung der Auflösung nacheinander verschiedene Teilbereiche jedes einem Detektorelement zugeordneten Zwischenbildbereichs freigibt. Diese Mikroblendenanordnung ist jedoch als reines Blendenmuster ohne brechende optische Glieder ausgeführt. Es ergibt sich somit ein "starrendes" Rundumsuchgerät. Die einzigen Bewegungen sind die mikroskopischen Bewegungen in der Mikroblendenanordnung. Es hat sich gezeigt, dass diese Bewegungen mit hoher Präzision erzeugbar sind. Es ist nicht notwendig, zusätzlich Gesichtsfeldbereiche nachträglich zu einem elektronischen Bild zusammenzusetzen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: zeigt ein "Fischaugenobjektiv" als erstes abbildendes optisches System zur Erzeugung eines Bildes eines Halbraumes in einer Zwischenbildebene mit den Abbildungsstrahlen für verschiedene Einfallswinkel.
- Fig.2: zeigt ein zweites abbildendes optisches System zum Abbbilden der in der Zwischenbildebene erzeugten Zwischenabbildung des Halbraumes auf einem bildauflösenden Detektor.
- Fig.3: zeigt ein erstes Blendenraster mit einem Schachbrettmuster einer in der Zwischenbildebene angeordneten Mikroblendenanordnung.
- Fig.4: zeigt ein dem ersten Blendenraster überlagertes zweites Blendenraster mit einem Streifenmuster.
- Fig.5: zeigt die durch die Überlagerung des ersten und des zweiten Blendenrasters erhaltene Blendenstruktur der Mikroblendenanordnung für eine Position der ersten und zweiten Blendenraster.

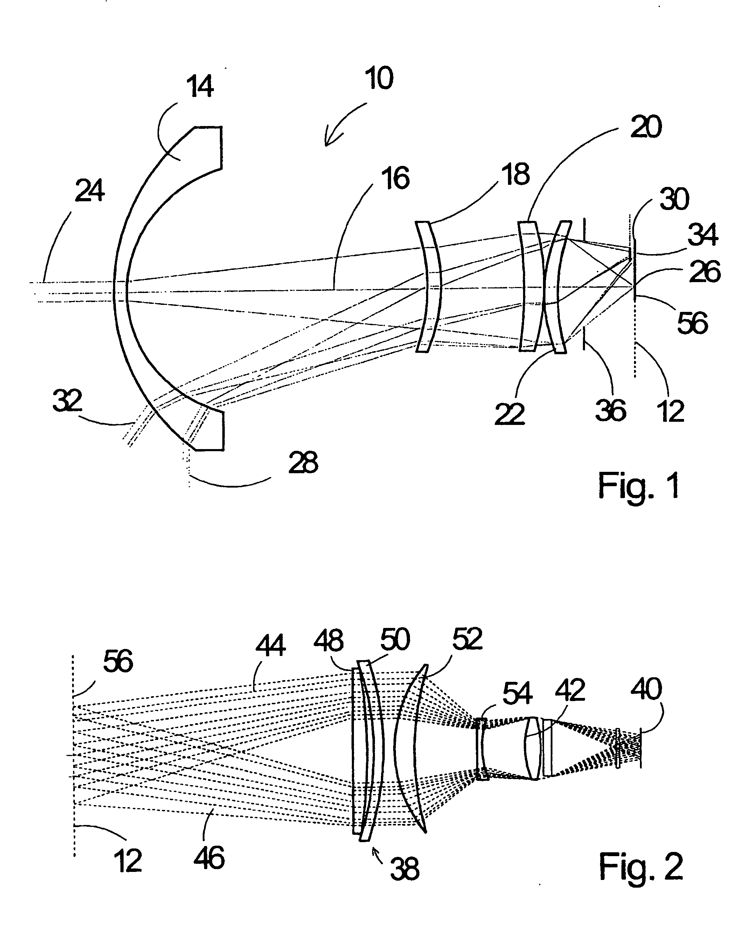

In Fig. 1 ist generell mit 10 ein erstes abbildendes optisches System in Form eines Fischaugenobjektivs bezeichnet, welches ein den Halbraum umfassendes Gesichtsfeld auf eine Zwischenbildebene 12 abbildet. Das Fischaugenobjektiv 10 weist eine objektseitige stark negative, konvex-konkave Linse 14 auf. Der Krümmungsradius der bildseitigen Fläche der Linse 14 ist wesentlich geringer als der Krümmungsradius der objektseitigen Fläche. Die Linse 14 ist daher in der Mitte relativ dünn. Die Dicke der Linse 14 nimmt zum Rand hin stark zu. Betrachtet man die in verschiedenen Abständen von der optischen Achse 16 liegenden Bereiche der Linse 14 als "Prismen", dann wird der Winkel zwischen den brechenden Flächen dieser Prismen um so größer, je weiter man sich von der optischen Achse entfernt. Um so größer ist auch die Ablenkung der Strahlen. Durch diese Linse 14 werden die Strahlen, die mit der optischen Achse 16 einen großen Winkel bilden, wie durch Prismen stark gebrochen, so daß sie dann unter einen wesentlich kleineren Winkel mit der optischen Achse auf das bildseitige Linsensystem mit den Linsen 18, 20 und 22 fallen. Dieses Linsensystem braucht nur einen relativ geringen Öffnungswinkel zu haben.

In Fig.1 sind drei Abbildungsstahlengänge für drei verschiedene Einfallsrichtungen des Halbraumes dargestellt. Die einfallenden Strahlen sind parallel, da die Objektszene im Unendlichen liegt.

Das längs der optischen Achse 16 einfallende parallele Lichtbündel 24 wird durch die negative Linse 14 divergent gemacht. Dieses divergente Lichtbündel wird dann durch die Linsen 18, 20 und 22 in einem Punkt 26 in der Zwischenbildebene 12 und auf der optischen Achse 16 gesammelt.

Wie man sieht, erfaßt die objektseitige Linse 14 auch Lichtstrahlen, die unter einem Winkel von 90° zur optischen Achse 16 einfallen. Ein so einfallendes paralleles Lichtbündel ist in Fig. 1 mit 28 bezeichnet. Dieses Lichtbündel 28 wird durch den äußeren Rand der Linse 14 mit einem "Prisma", dessen Eintritts- und Austrittsfläche eine großen Winkel miteinander bilden, stark abgelenkt und ebenfalls divergent gemacht. Dieses divergente Lichtbündel fällt mit einem relativ kleinen Winkel zur optischen Achse auf das übrige Linsensystem mit den Linsen 18, 20 und 22 und wird in der Zwischenbildebene in einem Bildpunkt 30 gesammelt.

Ein drittes paralleles Lichtbündel 32 fällt aus einer Richtung ein, die einen etwas kleineren Winkel mit der optischen Achse 16 bildet. Das von der Linse 14 für dieses Lichtbündel gebildete "Prisma" hat eine geringeren Winkel zwischen seinen Flächen und lenkt das Lichtbündel dementsprechend um einen geringeren Winkel ab als der, um den das Lichtbündel 28 abgelenkt wird. Das durch die Linse 14 divergent gemachte Lichtbündel 32 fällt unter einem geringeren Winkel zur optischen Achse als das Lichtbündel 28 auf das von den Linsen 18, 20 und 22 gebildete Linsensystem und wird von diesem in einem Bildpunkt 34 radial einwärts von dem Bildpunkt 30 in der Bildebene 12 gesammelt.

Die Lichtbündel 24, 28 und 32 werden begrenzt durch eine hinter der Linse 22 angeordnete Aperturblende 36.

Das beschriebene Fischaugenobjektiv bildet somit den gesamten Halbraum von 180°, d.h. von +90° bis -90° bezogen auf die optische Achse 16 in einem Bild in der Zwischenbildebene 12 ab. Dabei ist allerdings üblicherweise die Abbildung etwas verzerrt: eine nicht durch die optische Achse 16 gehende gerade Linie erscheint gekrümmt.

Fig.2 zeigt ein zweites abbildendes optisches System, das generell mit 38 bezeichnet ist. Durch das zweite abbildende optische System wird das in der Zwischenbildeben 12 erzeugte Bild des Gesichtsfeldes, d.h. des Halbraumes, auf einen bildauflösenden Detektor 40 abgebildet. Diese Abbildung erfolgt in einem telezentrischen Strahlengang. Bei einem telezentrischen Strahlengang wird die Aperturblende des Systems 38 rückwärts im Unendlichen abgebildet. Das bedeutet, daß alle Strahlen, die durch einen Punkt der Aperturblende gehen, objektseitig ein paralleles Strahlenbündel bilden. Dadurch wird die axiale Lage einer in einer Bildebene, hier der Zwischenbildebene 12 sitzenden Gesichtsfeldblende unkritisch für die Helligkeit der Bildpunkte.

In Fig.2 bildet eine bildseitig angeordnete Linse 42 eine Aperturblende des zweiten abbildenden optischen Systems. In Fig.2 sind zwei Strahlenbündel 44 und 46 dargestellt, welche durch das in der Zwischenbildebene 12 erzeugte Zwischenbild und durch den Rand der Linse 42 gehen. Fig.2 zeigt also nicht die Abbildungsstrahlen der Abbildung des Zwischenbildes auf dem Detektor 40. Man sieht, daß alle durch einen Randpunkt der Linse 42 gehende Strahl schließlich "rückwärts" ein paralleles Strahlenbündel bilden.

Das Zwischenbild in der Zwischenbildebene 12 wird in konventioneller Weise durch das aus fünf Linsen, nämlich den Linsen 48, 50, 52, 54 und der Linse 42 bestehende zweite abbildende optische System oder Objektiv 38 auf dem Detektor 40 abgebildet. Die Abbildung erfolgt verkleinert mit einer Verkleinerung von 2:1. Damit werden die Abmessungen des Zwischenbildes auf die Abmessungen des Detektors verkleinert. Der Detektor 40 ist ein bildauflösender Detektor mit einem Raster oder Mosaik von Detektorelementen.

Jedem Detektorelement ist nun ein Zwischenbildbereich zugeordnet, der durch das zweite abbildende optische System auf diesem Detektorelement abgebildet ist. Bei einem quadratischen Detektorelement ist das ein entsprechend quadratischer Bereich des Zwischenbildes. Wenn man sich einmal vorstellt, daß das Detektorelement leuchtet, dann würde über das System 38 "rückwärts" der zugehörige Zwischenbildbereich ausgeleuchtet. Dieser würde wieder "rückwärts" über das Fischaugenobjektiv einen entsprechenden Bereich des Halbraumes ausleuchten. Da das Fischaugenobjektiv den gesamten Halbraum in dem Zwischenbild abbildet, würde die Auflösung eines so aufgebauten Rundumsuchgerätes unzureichend.

Deshalb ist in der Zwischenbildebene 12 im Bereich des Zwischenbildes eine Mikroblendenanordnung vorgesehen, die in Fig. 1 und 2 generell mit 56 bezeichnet ist.

Die Mikroblendenanordnung kann ein einziges Mikroblendenraster mit quadratischen Rasterbereichen aufweisen, wobei jeder Rasterbereich die Abmessungen eines der vorstehend erläuterten Zwischenbildbereiches besitzt. Jeder Rasterbereich weist vier gleiche Quadranten auf. Ein Quadrant ist in gleichmäßigem Muster für die vom Detektor erfaßte Strahlung durchlässig, die drei übrigen Quadranten sind undurchlässig. Durch Piezosteller oder ähnliche Bauteile ist dieses Mikroblendenraster in zwei zueinander senkrechten Richtungen jeweils um einen der Kantenlänge des Quadranten entsprechenden Schritt verstellbar. Der durchlässige Quadrant läßt nun jeweils nur die Strahlung zum Detektor 40 durch, die auf diesen Quadranten fällt. Der übrige Teil des Zwischenbildbereiches wird jeweils abgedeckt. Der durchlässige Quadrant bildet eine in der Zwischenbildebene 12 angeordnete Gesichtsfeldblende. Durch schrittweise Verstellung des Mikroblendenrasters nach "oben", nach "rechts", nach "unten" und wieder nach "links" kann jeder Zwischenbildbereich quadrantenweise abgetastet werden. Die bei jeder Stellung des Mikroblendenrasters erhaltenen Signale der Detektorelemente werden zu einem "elektronischen Bild" mit erhöhter Auflösung "ineinandergeschachtelt".

Auf diese Weise erhält man bei gleichzeitiger Abbildung des gesamten Halbraumes durch das Fischaugenobjektiv eine hinreichend hohe Auflösung. Man erhält ein "starrendes", also sich nicht makroskopisch bewegendes Rundumsuchgerät.

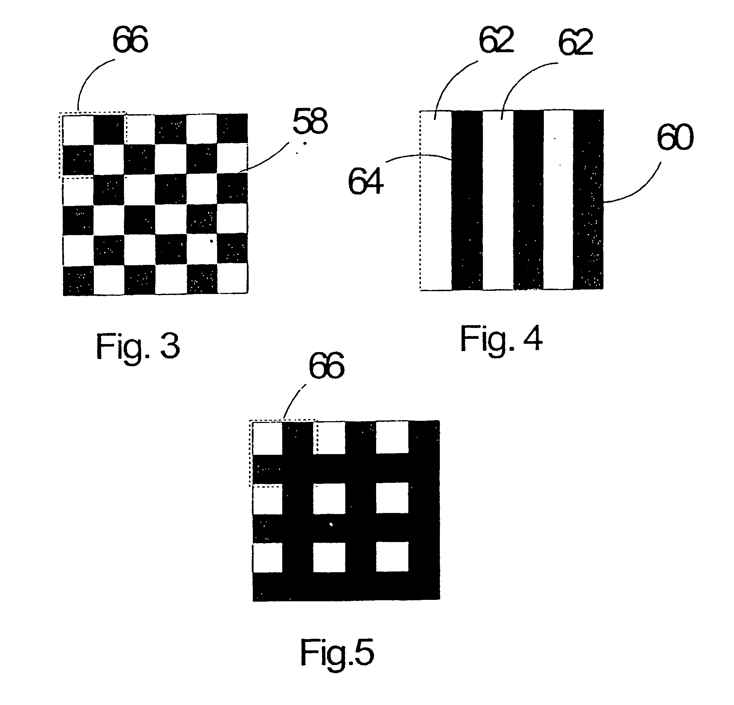

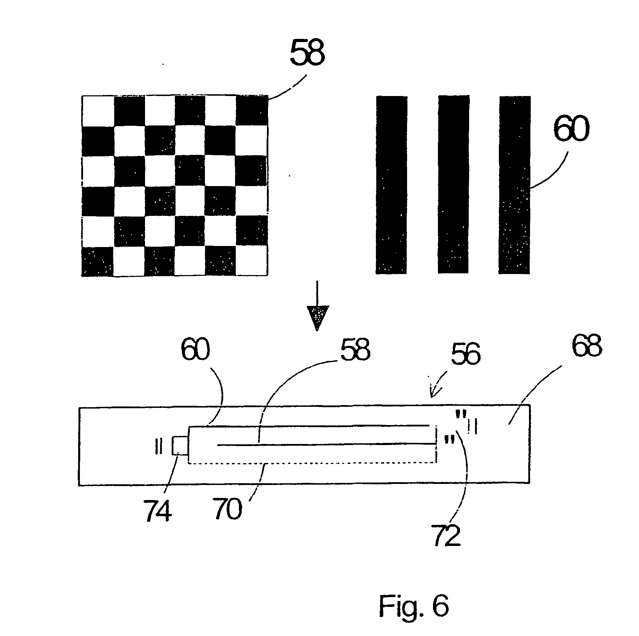

Eine besonders vorteilhafte Ausbildung der Mikroblendenanordnung ist in den Figuren 3 bis 5 dargestellt.

Die Mikroblendenanordnung 56 besteht aus zwei übereinanderliegenden Mikroblendenrastern 58 (Fig.3) und 60 (Fig.4). Das Mikroblendenraster 58 ist ein Schachbrettmuster. Vier aneinandergrenzende Felder des Schachbrettmusters haben die Abmessungen eines der quadratischen Zwischenbildbereiche. Das Schachbrettmuster ist in jeder Stellung auch so angeordnet, daß jeder Zwischenbildbereich von genau vier Feldern des Schachbrettmusters überdeckt wird. Das Mikroblendenraster 60 ist ein Streifenmuster mit *abwechselnd* durchlässigen und undurchlässigen Streifen 62 bzw. 64. Die Breite jedes Streifens 62 oder 64 entspricht der Breite eines Feldes des Schachbrettmusters 58. Das Mikroblendenraster 60 liegt in jeder Stellung so über dem Mikroblendenraster 58, daß jeder Streifen 62 oder 64 des Streifenmusters eine in Fig.3 vertikale Spalte der abwechselnd durchlässigen und undurchlässigen Felder des Schachbrettmusters überdeckt.

Die Überlagerung der beiden Mikroblendenraster 58 und 60 ist in Fig.5 dargestellt.

Über der ersten, in Fig.3 linken Spalte des Schachbrettmusters des Mikroblendenrasters 58 liegt ein durchlässiger Streifen 62. Hier erscheint also das Schachbrettmuster, d.h. von oben nach unten "hell, dunkel, hell, dunkel, hell dunkel". Die zweite Spalte ist infolge des undurchlässigen Streifens 64 insgesamt undurchlässig. Betrachtet man einen einzelnen, quadratischen Zwischenbildbereich, wie er in Fig.3 und 5 links oben gestrichelt dargestellt und mit 66 bezeichnet ist. Man erkennt, daß der in Fig.5 linke obere Quadrant des zu diesem Zwischenbildbereich 66 gehörigen Mikroblendenrasters durchlässig ist und die drei übrigen Quadranten abgedeckt sind.

Verschiebt man das Mikroblendenraster 60 um einen Schritt, also eine Streifenbreite nach links in Fig.4 und 5, so wird die in Fig. 3 linke Spalte des Schachbrettmusters des Mikroblendenrasters 58 durch den undurchlässigen Streifen 64 vollständig abgedeckt. Dafür wird jetzt durch den nächsten durchlässigen Streifen 62 die zweite Spalte des Schachbrettmusters freigegeben. Bezogen auf den betrachteten Zwischenbildbereich 66 bedeutet das, daß jetzt der rechte untere Quadrant durchlässig ist und wieder die drei anderen Quadranten abgedeckt sind.

Verschiebt man bei dieser Stellung des Mikrolinsenrasters 60 das Mikrolinsenraster 58 um einen Schritt, welcher der Höhe eines Schachbrettfeldes entspricht, nach oben in Fig.3, dann wird der rechte obere Quadrant des betrachteten Zwischenbildbereiches 66 freigegeben, während wieder die übrigen Quadranten abgedeckt werden.

Verschiebt man aus dieser verschobenen Stellung des Mikroblendenrasters 58 das Mikroblendenraster 60 wieder in seine ursprüngliche Position, wie sie in Fig.4 dargestellt ist, dann wird der linke untere Quadrant des betrachteten Zwischenbildbereiches 66 freigegeben.

Man kann mit der beschriebenen Anordnung somit nacheinander alle vier Quadranten jedes Zwischenbildbereiches 66 unter Abdeckung der jeweils übrigen drei Quadranten freigeben, wobei jedes Mikroblendenraster 58 und 60 jeweils nur in einer von zwei zueinander senkrechten Richtungen verstellt wird. Mikroblendenraster 58 wird nur vertikal, Mikroblendenraster 60 nur horizontal bewegt.

Es hat sich gezeigt, daß diese Verstellung von zwei Mikroblendenrastern 58 und 60 jeweils nur in einer Richtung konstruktiv einfacher und genauer ist als die Verstellung eines einzigen Mikroblendenrasters in zwei Richtungen.

Die Verstellung der beiden Mikroblendenraster kann mittels Piezostellern erfolgen.

Die beiden gegeneinander verstellbaren Mikroblendenraster sind etwas axial, also in Richtung der optischen Achse 16, gegeneinander versetzt. Sie liegen nicht beide genau in der Zwischenbildebene 12. Durch den telezentrischen Strahlengang des zweiten abbildenden optischen Systems ist das aber unkritisch.

## Patentansprüche

1. Rundumsuchgerät zum Beobachten eines großen Raumwinkels mittels eines bildauflösenden Detektors (40) mit einem Raster von Detektorelementen, enthaltend:
ein erstes abbildendes optisches System (10), durch welches eine Zwischenabbildung eines Gesichtsfelds in einer Zwischenbildebene (12) erzeugbar ist, ein zweites abbildendes optisches System (38), durch welches die Zwischenbildebene (12) auf dem bildauflösenden Detektor (40) abgebildet wird, wobei jedem Detektorelement ein Zwischenbildbereich (66) zugeordnet ist, der auf das Detektorelement abgebildet wird, und eine in der Zwischenbildebene (12) angeordnete mikrooptische Anordnung (56), durch welche nacheinander verschiedene Teilbereiche jedes Zwischenbildbereiches unter Abdeckung des übrigen Zwischenbildbereiches (66)
freigebbar sind,
**dadurch gekennzeichnet, dass**
(a) das erste abbildende optische System (10) eine Fischaugenoptik ist,
(b) die mikrooptische Anordnung (56) von einer reinen Mikroblendenanordnung ohne brechende Glieder gebildet ist,
(c) die Mikroblendenanordnung (56) ein erstes Blendenraster (58) mit einem Schachbrettmuster und ein darüberliegendes zweites Blendenraster (60) mit einem Streifenmuster mit abwechselnd durchlässigen und undurchlässigen Streifen (62 bzw. 64) aufweist, wobei die Breite der Streifen (62, 64) des zweiten Blendenrasters (60) gleich der Breite der Felder des Schachbrettmusters des ersten Blendenrasters (58) ist und jeder Streifen (62, 64) des zweiten Blendenrasters (60) einen Streifen von abwechselnd durchlässigen und undurchlässigen Feldern des Schachbrettmusters des ersten Blendenrasters (58) überdeckt, und
(d) jeweils vier in einem Quadrat aneinandergrenzende Felder des Schachbrettmusters des ersten Blendenrasters (60) einem Zwischenbildbereich (66) des Zwischenbildes entsprechen.

2. (a) Rundumsuchgerät nach Anspruch 1,
**dadurch gekennzeichnet, dass**
das erste Blendenraster (58) in einer ersten Richtung parallel zur Richtung der Streifen (62,64) des zweiten Blendenrasters (60) zwischen einer ersten Stellung und einer um die Höhe eines Feldes des Schachbrettmusters versetzten Stellung schrittweise verstellbar ist, und
(b) das zweite Blendenraster (60) in einer zweiten, zu der ersten Richtung senkrechten Richtung zwischen einer ersten Stellung und einer um die Breite eines Feldes des Schachbrettmusters des ersten Blendenrasters (58) versetzten zweiten Stellung schrittweise verstellbar ist.

3. Rundumsuchgerät nach Anspruch 1 oder 2,
**dadurch gekennzeichnet, dass**
die Fischaugenoptik (10) ein 180°-Gesichtsfeld erfasst.

4. Rundumsuchgerät nach einem der vorangehenden Ansprüche,
**dadurch gekennzeichnet, dass**
das zweite abbildende optische System (38) das Zwischenbild verkleinert auf den bildauflösenden Detektor (40) abbildet.

5. Rundumsuchgerät nach einem der vorangehenden Ansprüche,
**dadurch gekennzeichnet, dass**
die Zwischenbildebene (12) durch das zweite abbildende optische System im telezentrischen Strahlengang auf den Detektor (40) abgebildet wird.

## Claims

1. Panoramic viewfinder for observing a large solid angle by means of an image-resolving detector (40) with an array of detector elements, including: a first imaging optical system (10) which can be used to produce an intermediate image of a field of view in an intermediate image plane (12) a second imaging optical system (38) which is used to image the intermediate image plane (12) on the image-resolving detector (40), each detector element being assigned an intermediate image area (66) which is imaged onto the detector element, and a microoptical arrangement (56) which is arranged in the intermediate image plane (12) and can be used for sequentially uncovering different subareas of each intermediate image area while masking the remaining intermediate image area (66), **characterized in that**
(a) the first imaging optical system (10) is a fish-eye optical system,
(b) the microoptical arrangement (56) is formed by a pure microshutter arrangement without refracting elements,
(c) the microshutter arrangement (56) has a first shutter array (58) having a chessboard pattern and, situated thereabove, a second shutter array (60), having a stripped pattern with alternatingly transparent and opaque strips (62 and 64 respectively), the width of the strips (62, 64) of the second shutter array (60) being equal to the width of the sections of the chessboard pattern of the first shutter array (58), and each strip (62, 64) of the second shutter array (60) covering a strip of alternatingly transparent and opaque sections of the chessboard pattern of the first shutter array (58), and
(d) in each case four sections of the chessboard pattern of the first shutter array (60), which border one another in a square, correspond to an intermediate image area (66) of the intermediate image.

2. Panoramic viewfinder according to Claim 1,
**characterized in that**
(a) the first shutter array (58) can be adjusted in steps between a first position and a position offset by the height of a section of the chessboard pattern in a first direction parallel to the direction of the strips (62, 64) of the second shutter array (60), and
(b) the second shutter array (60) can be adjusted in steps between a first position and a second position offset by the width of a section of the chessboard pattern of the first shutter array (5) in a second direction, perpendicular to the first direction.

3. Panoramic viewfinder according to Claim 1 or 2, **characterized in that** the fish-eye optical system (10) covers a 180° field of view.

4. Panoramic viewfinder according to one of the preceding claims, **characterized in that** the second imaging optical system (38) images the intermediate image onto the image-resolving detector (40) in a reduced fashion.

5. Panoramic viewfinder according to one of the preceding claims, **characterized in that** the intermediate image plane (12) is imaged onto the detector (40) by the second imaging optical system in the telecentric beam path.

## Revendications

1. Appareil de repérage panoramique pour surveiller un grand angle solide au moyen d'un détecteur (40) à résolution d'image doté d'un réseau d'éléments détecteur, comprenant : un premier système (10) de reproduction optique, par lequel une reproduction intermédiaire d'un champ de vision peut être produite dans un plan d'image intermédiaire (12), un deuxième système (38) de reproduction optique, par lequel le plan d'image intermédiaire (12) est reproduit sur le détecteur (40) à résolution d'image, sachant qu'une zone d'image intermédiaire (66) est associée à chaque élément détecteur, laquelle est reproduite sur l'élément détecteur, et un ensemble micro-optique (56), disposé dans le plan d'image intermédiaire (12) et par lequel des régions partielles différentes de chaque zone d'image intermédiaire peuvent être successivement dégagées, en couvrant le reste de la zone d'image intermédiaire (66),
**caractérisé en ce que**
(a) le premier système (10) de reproduction optique est un système optique à très grand angle (« fish-eye »),
(b) l'ensemble micro-optique (56) est constitué d'un pur ensemble de micro-obturateurs, sans éléments réfractifs,
(c) l'ensemble de micro-obturateurs (56) présente un premier réseau d'obturateurs (58) à motif en échiquier et un deuxième réseau d'obturateurs (60), superposé, à motif de bandes avec des bandes alternativement translucides et opaques (respectivement 62 et 64), sachant que la largeur des bandes (62, 64) du deuxième réseau d'obturateurs (60) est égale à la largeur des champs du motif en échiquier du premier réseau d'obturateurs (58) et que chaque bande (62, 64) du deuxième réseau d'obturateurs (60) recouvre une bande de champs alternativement translucides et opaques du motif en échiquier du premier réseau d'obturateurs (58), et
(d) quatre champs adjacents en un carré du motif en échiquier du deuxième réseau d'obturateurs (60) correspondent chaque fois à une zone d'image intermédiaire (66) de l'image intermédiaire.

2. Appareil de repérage panoramique selon la revendication 1, **caractérisé en ce que**
(a) le premier réseau d'obturateurs (58) peut être déplacé pas à pas dans une première direction parallèlement à la direction des bandes (62, 64) du deuxième réseau d'obturateurs (60), entre une première position et une position décalée de la hauteur d'un champ du motif en échiquier, et
(b) le deuxième réseau d'obturateurs (60) peut être déplacé pas à pas dans une deuxième direction perpendiculaire à la première direction, entre une première position et une deuxième position décalée de la largeur d'un champ du motif en échiquier du premier réseau d'obturateurs (58).

3. Appareil de repérage panoramique selon la revendication 1 ou 2, **caractérisé en ce que** le système optique (10) à très grand angle (« fish-eye ») couvre un champ de vision de 180°.

4. Appareil de repérage panoramique selon l'une quelconque des revendications précédentes, **caractérisé en ce que** le deuxième système (38) de reproduction optique reproduit l'image intermédiaire de manière réduite sur le détecteur (40) à résolution d'image.

5. Appareil de repérage panoramique selon l'une quelconque des revendications précédentes, **caractérisé en ce que** le plan d'image intermédiaire (12) est reproduit par le deuxième système de reproduction optique sur le détecteur (40) dans le trajet de rayons télécentrique.
